# EUROPÄISCHE PATENTANMELDUNG

(11) **EP 2 767 435 A2**
(43) Veröffentlichungstag der Anmeldung: **20.08.2014**
(21) Anmeldenummer: 14155118.4
(22) Anmeldetag: 14.02.2014
(51) Int. Cl.: B60P 1/02

(54) **Multifunktions-Anhänger zum Transportieren und Aufstellen von Behältnissen**

(30) Priorität: 14.02.2013 DE 102013002508
(71) Anmelder: Kuhr, Michael, 26871 Papenburg (DE)
(72) Erfinder: Kuhr, Michael, 26871 Papenburg (DE)
(74) Vertreter: Jabbusch, Matthias

(57) **Zusammenfassung**

Die Erfindung betrifft einen Multifunktions-Anhänger zum Transportieren und Aufstellen von Behältnissen, wie Containern, Mulden, Transportplattformen und Kipperplattformen.

Der Erfindung liegt die Aufgabe zugrunde mit einem Anhänger den Transport von Behältnissen der eingangs bezeichneten Gattung ohne den Einsatz externer Hebeeinrichtungen zu ermöglichen.

Diese Aufgabe ist dadurch gelöst, dass an den Längsseiten (3) des Anhänger-Fahrgestells seitlich vorziehbare Hubbrücken (10) mit abwärts gerichteten Ständern (10b) angeordnet sind, dass die Hubbrücken mit dem Behältnis lösbar verbindbar sind, und dass die Hubbrücken mit dem Behältnis anhebbar und absenkbar ausgebildet sind.

## Beschreibung

Die Erfindung betrifft einen Multifunktions-Anhänger zum Transportieren und Aufstellen von Behältnissen, wie Containern, Mulden, Transportplattformen und Kipperplattformen.

Handwerksbetriebe, z. B. Installationsbetriebe, führen für Arbeiten außerhalb der eigenen Werkstätten in größerer Menge Werkzeuge, Arbeitsgeräte und Materialien zur Baustelle mit sich, die dort oft über mehrere Tage zur Verfügung stehen müssen und dabei gegen Diebstahl gesichert sein müssen. Es ist bekannt, für diesen Zweck Stahlcontainer zu verwenden. Diese Container können wegen ihres Gewichts nur mit Hilfe von separaten Hubeinrichtungen, wie Kränen, auf Transportanhänger aufgesetzt werden und vor Ort von den Transportanhängern heruntergenommen werden. Diese Verfahrensweise erfordert somit die Bereitstellung von Hubeinrichtungen und ist somit zeit- und kostenaufwändig. Handwerksbetriebe, Gartenbaubetriebe führen zum An- und Abtransport von losen Schüttgütern Kipper in Form eines eigenständigen Anhängers mit sich. Der Anhänger ist somit nur in einer Funktion als Kipper einsetzbar ohne weitere Funktion. Handwerksbetriebe transportieren zum Abtransport von Bauschutt und anderem Müll Mulden mit zur Baustelle. Diese verbleiben für eine gewisse Zeit auf der Baustelle, bis sie voll sind und abgeholt werden. Die Mulden können eigenständige Anhänger sein, dann werden für den gleichzeitigen Einsatz mehrere Anhänger benötigt. Es können auch Aufsetzmulden für normale Anhänger sein, dann besteht die Schwierigkeit des Auf- und Absetzens der Mulde auf den Anhänger mit entsprechendem notwendigem Gerät.

Der Erfindung liegt die Aufgabe zugrunde, mit einem Anhänger den Transport von Behältnissen der eingangs bezeichneten Gattung ohne den Einsatz externer Hebeeinrichtungen zu ermöglichen.

In Lösung dieser Aufgabe ist ein Multifunktions-Anhänger der eingangs bezeichneten Gattung gefunden worden, der durch die Merkmalskombination des Patentanspruchs 1 gekennzeichnet ist.

Weiterbildungen der Erfindung ergeben sich aus den Unteransprüchen.

Die erfindungsgemäße Lösung bietet den Vorteil, dass ein Behältnis, beispielsweise ein Container, ohne Zuhilfenahme einer Hebevorrichtung, insbesondere eines Kranes, auf den Anhänger aufgesetzt werden kann und vor Ort von dem Anhänger abgesetzt werden kann. Zum Aufsetzen eines Containers auf den Anhänger wird je eine Hubbrücke neben den Längsseiten des Containers und parallel zu diesen aufgestellt, werden die Hubbrücken mit dem Container verbunden und wird der Container von den Hubbrücken soweit angehoben, dass der Anhänger in Längsrichtung unter den Container geschoben werden kann. Durch Absenken der Hubbrücken wird der Container dann auf den Anhänger aufgesetzt. Das Abladen des Containers vom Anhänger erfolgt in der umgekehrten Reihenfolge. Diese Arbeiten können auch von einer einzigen Person ausgeführt werden. Nach dem Absetzen des Containers vor Ort steht der Anhänger mit den am Anhänger wieder beidseitig angeordneten Hubbrücken für weitere Containertransporte zur Verfügung, so dass ein Unternehmen für Transport und Aufstellung mehrerer Container bzw. Behältnisse nur einen erfindungsgemäß ausgebildeten Anhänger benötigt.

Ausführungsbeispiele der Erfindung, die sich auf den Transport eines Containers beziehen, sind in der Zeichnung mit wechselnden Maßstäben schematisch dargestellt. Es zeigen:
- Fig. 1:: eine Draufsicht auf einen Multifunktions-Anhänger für Container, gemäß einem ersten Ausführungsbeispiel,
- Fig. 2:: eine Seitenansicht des Anhängers gemäß Fig. 1,
- Fig. 3 und 4:: eine Hubbrücke mit einer anderen Ausführung einer lösbaren Verbindung zwischen der Hubbrücke und einem Container,
- Fig. 5:: eine Hubbrücke in einer anderen Ausführungsform,
- Fig. 6:: eine Hubbrücke in einer weiteren Ausführungsform,
- Fig. 7:: eine Ansicht einer anders ausgebildeten Hubbrücke, angeordnet an einem Container,
- Fig. 8:: eine Draufsicht auf den Container und die Hubbrücken-anordnung gemäß Fig. 7, und
- Fig. 9:: eine andere Ausbildung der Hubbrücke gemäß Fig. 7 und 8.

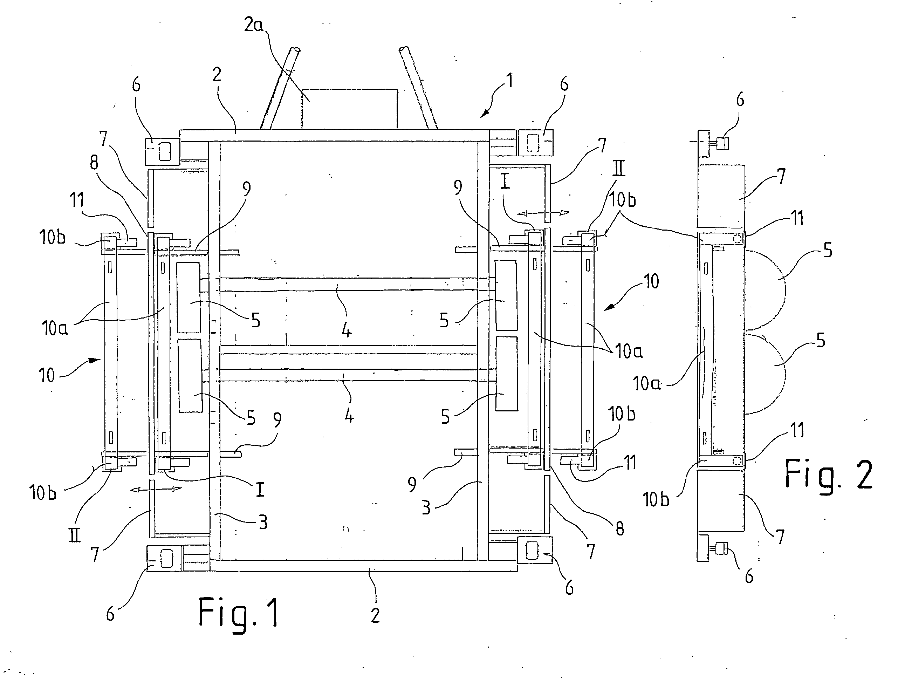

Fig. 1 zeigt gemäß einem ersten Ausführungsbeispiel einen Multifunktions-Anhänger 1 mit zwei einander gegenüberliegenden Querprofilen 2 und zwei einander gegenüberliegenden Längsprofilen 3, die gemeinsam den Anhängerrahmen bilden. Zwei Radachsen 4 führen vier Räder 5. In den Eckenbereichen des Anhängerrahmens sind Containerverschlüsse (Twistlocks) 6 angeordnet, mit denen ein auf den Anhängerrahmen aufgesetzter Container in bekannter Weise festgesetzt wird. An den Enden der Längsprofile 3 sind seitlich vorstehende Seitenverkleidungs-Winkelbleche 7 befestigt. An den Unterseiten der Längsprofile 3 des Anhängers befinden sich auf jeder Seite zwei zeichnerisch nicht dargestellte Auszugsprofil-Führungen, in denen Auszugsprofile 9 quer zur Längsrichtung der Längsprofile 3 des Anhängers ein- und ausschiebbar geführt sind. An den freien Enden der Auszugsprofile 9 sind abnehmbare Seitenverkleidungen 8 angeordnet, die bei nicht ausgefahrenen Auszugsprofilen mit den Seitenverkleidungs-Winkelblechen 7 fluchten. 2a ist ein Behältnis für elektrische, hydraulische oder Druckluftversorgungseinrichtungen für die Hebevorrichtungen.

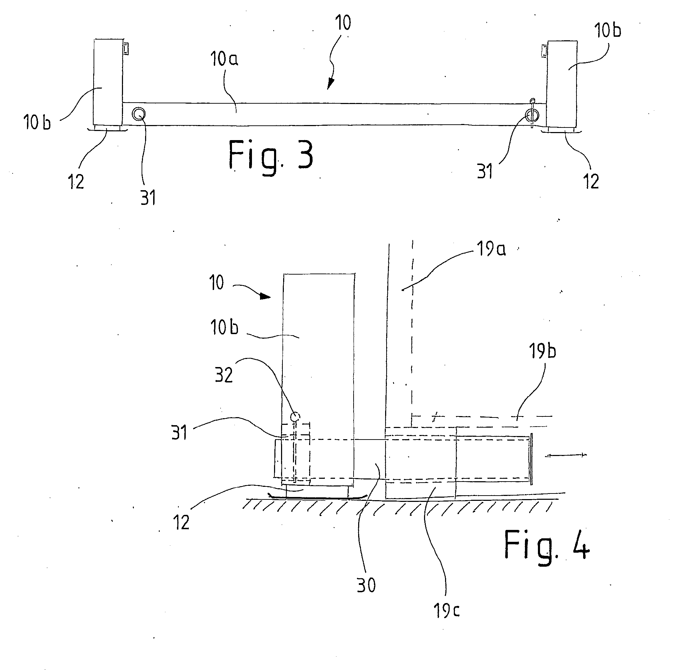

An den Außenenden der Auszugsprofile 9 sind innerhalb der Seitenverkleidungen 8 parallel zur Längsachse des Anhängers ausgerichtete Hubbrücken 10 lösbar befestigt. Wie Fig. 2 und 3 zeigen, hat jede Hubbrücke 10 ein waagerechtes Längsprofil 10a, an dessen Enden je ein abwärts gerichteter Ständer 10b angeordnet ist. Jeder Ständer 10b ist teleskopartig verlängerbar indem ein Stempel 12 nach unten ausgefahren wird, was druckmittelbetätigt, elektromechanisch oder mechanisch, z. B. mit einer Handkurbel, erfolgen kann. Die Hubbrücken 10 können mit den Auszugsprofilen 9 von den Längsprofilen 3 des Anhängers zur Seite soweit weggezogen werden, dass sie gerade außerhalb der Längsränder eines Containers 19 stehen, der auf den Anhänger aufgeladen werden soll bzw. auf dem Anhänger liegend von diesem abgeladen werden soll. Die Hubbrücken 10 werden also von einer Ruheposition I, wie mit Pfeilen angedeutet, in eine Funktionsposition II verschoben. Nach Einnahme der Funktionsposition II werden die Hubbrücken von den Auszugsprofilen 9 gelöst. Die Hubbrücken haben einwärts vorstehende Einsteckzapfen 11, die nachfolgend in zugeordnete Ausnehmungen in den Seitenwänden des Containers eingeschoben werden. Zum Aufladen eines Containers auf den Anhänger werden die Hubbrücken unter teleskopartigem Ausfahren der Stempel 12 mitsamt dem angekoppelten Container soweit hochgefahren, dass der Anhänger in Längsrichtung unter den Container geschoben werden kann. Vorzugsweise geschieht dies mittels Dorn und Führungsschiene oder nur mit seitlichen Führungsblechen, wodurch der Transportanhänger zwangsweise in die richtige Position gebracht wird. Unter Absenken der Hubbrücken wird der Container dann auf den Anhänger aufgesetzt. Danach werden die Einsteckzapfen 11 der Hubbrücken von dem Container gelöst und werden die Hubbrücken unter Einfahren der Stempel 12 so weit abgesenkt, dass sie wieder mit den Auszugsprofilen 9 verbunden werden können und mit diesen, unter dem aufgeladenen Container liegend, an die Längsprofile 3 des Anhängers herangeschoben werden können. Nach Arretierung der Hubbrücken an den Längsprofilen des Anhängers und nach Arretierung des aufgeladenen Containers mit Hilfe der Container-Arretierungen 6 kann der Anhänger mit dem aufgeladenen Container von einem Zugfahrzeug zum Aufstellungsort des Containers gefahren werden. Vor Ort erfolgt dann das Abladen des Containers in der umgekehrten Reihenfolge. Die Hubbrücken werden wieder seitlich ausgefahren, von den Auszugsprofilen 9 gelöst, hochgefahren und über die Einsteckzapfen 11 mit dem Container verbunden, danach noch etwas weiter hochgefahren, so dass der Anhänger unter dem Container herausgezogen werden kann. Durch Herunterfahren der Hubbrücken wird der Container auf den Erdboden abgesetzt. Danach werden die Hubbrücken nach Lösen der Einsteckzapfen 11 von dem Container seitlich abgezogen und zu dem herausgefahrenen Anhänger gebracht, dort mit den Auszugsprofilen 9 verbunden und wieder an die Längsprofile 3 des Anhängers herangeschoben und dort arretiert. Der Anhänger ist dann zum Transport eines weiteren Containers einsatzbereit.

Fig. 3 und Fig. 4 zeigen in unterschiedlichen Maßstäben eine weitere Ausbildung einer Steckverbindung zwischen einer Hubbrücke 10 mit einem Längsprofil 10a, mit Ständern 10b und Stempeln 12 und einem angedeuteten Container 19. Dieser hat eine lotrechte Containerwand 19a und einen Containerboden 19b. Unterhalb der Containerwand 19a ist in jedem Eckenbereich des Containers unter dem Containerboden 19b eine Rohrführung 19c angeordnet, in der ein Auszugsrohr 30 seitlich unter dem Container heraus waagerecht verschiebbar geführt ist. Das Auszugsrohr 30 ist in eine Rohröffnung 31 in dem Längsprofil 10a jeder Hubbrücke 10 einschiebbar und dort mit einem Splint 32 festsetzbar. Nach Durchführung der insgesamt vier Steckverbindungen dieses Typs zwischen dem Container und den beiden Hubbrücken kann der Container 19 von den Hubbrücken 10 angehoben bzw. abgesenkt werden.

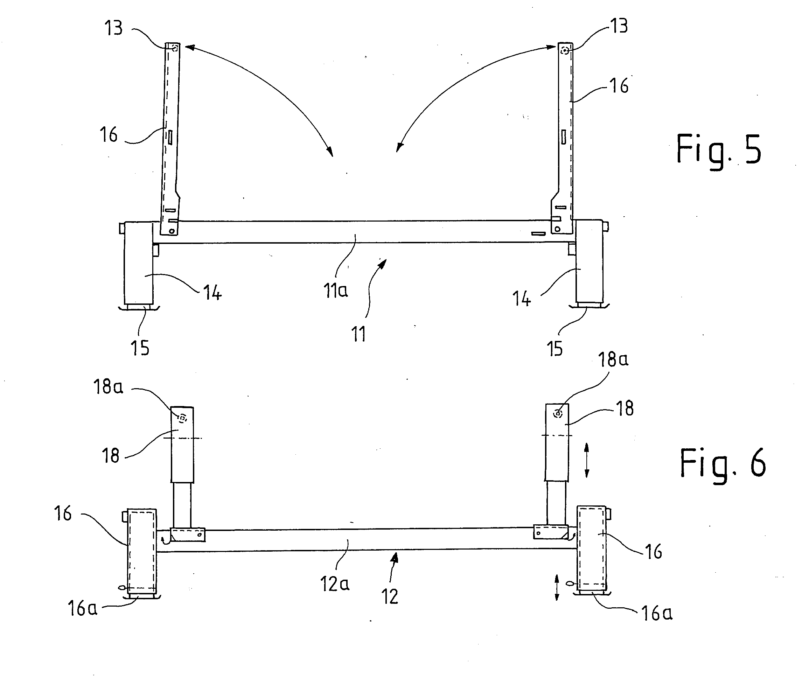

Fig. 5 zeigt die Ansicht einer Hubbrücke 11 mit einem Längsprofil 11 a. An den Enden des Längsprofils 11a befinden sich abwärts gerichtete Ständer 14. In den Ständern 14 sind Stempel 15 teleskopartig ausschiebbar angeordnet, deren Verschiebung hydraulisch, pneumatisch, elektromechanisch oder mechanisch bewirkt wird. Nahe den Enden des Längsprofils 11a der Hubbrücke sind Haltearme 16 angeordnet, die um 90° schwenkbar sind. Mindestens an den Enden der Haltearme 16 befinden sich Einsteckzapfen 13, die in korrespondierende Öffnungen im Container einschiebbar sind. Während des Transports eines auf den Anhänger aufgesetzten Containers sind die Haltearme 16 abwärts geschwenkt. Vor dem Anheben bzw. Absetzen des Containers vor Ort werden die Haltearme aufgerichtet und in der aufgerichteten Position über die Einsteckzapfen 13 mit dem Container verbunden. Damit wird sichergestellt, dass die Hubbrücke während des Anhebens bzw. Absetzens nicht aus der lotrechten Ebene heraus verkantet.

Fig. 6 zeigt eine andere Ausbildung einer Hubbrücke 12 mit Längsprofil 12a und seitlich angeordneten Ständern 16 mit Stempeln 16a. Zwei auf dem Längsprofil 12a schwenkbar angeordnete Haltearme 18 sind teleskopartig ausschiebbar ausgebildet. Die Ausschiebbewegung erfährt ihren Antrieb hydraulisch, pneumatisch, elektromechanisch oder mechanisch. 18a sind Einsteckzapfen, die wie vorbeschrieben in den Container eingesteckt werden. Bei dieser Ausbildung kann das Anheben und Absenken des Containers allein mit den Haltearmen 17 ausgeführt werden. Die Stempel 16a dienen dann nur zum Ausgleich von Bodenunebenheiten.

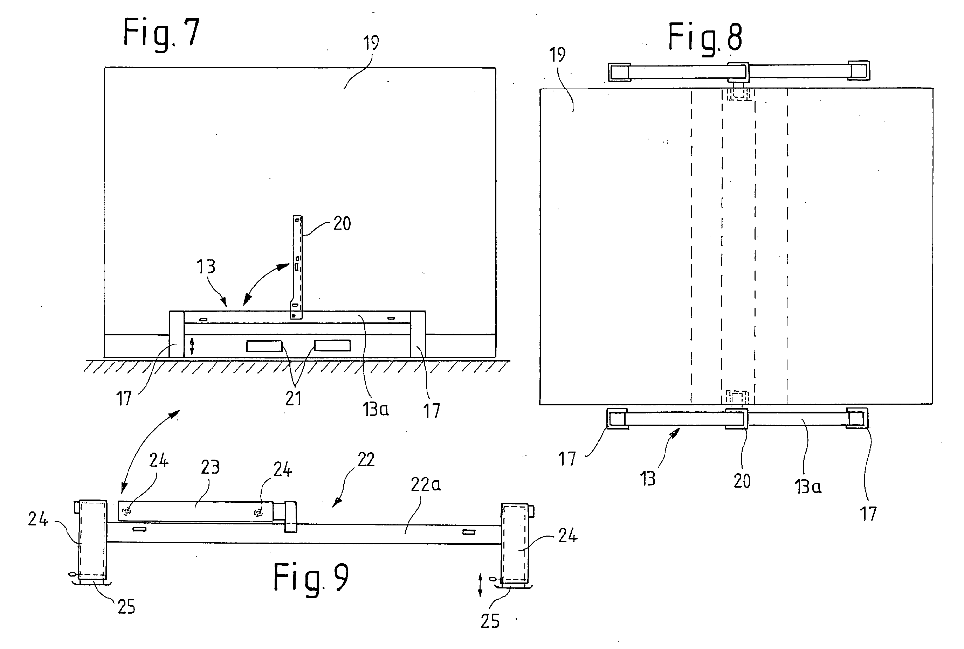

In den Fig. 7 und 8 ist eine andere Ausbildung einer Hubbrücke 13 mit Ständern 17, angeordnet an einem Container 19, in Seitenansicht und Draufsicht dargestellt. In den Ständern 17 befinden sich teleskopartig, hydraulisch, pneumatisch, elektromechanisch oder mechanisch ausschiebbare Stempel. Diese Hubbrücke 13 hat nur einen Haltearm 20 der sich in der Mitte des Hubbrücken-Längsprofils 13a befindet und dort um 90° schwenkbar angelenkt ist. 21 sind am Container vorhandene Öffnungen zum Einschieben der Gabel eines Gabelstaplers.

Fig. 9 zeigt eine Hubbrücke 22 ähnlich der Ausführung der Hubbrücke in den Fig. 5 und 6 mit einem Längsprofil 22a und Ständern 24 und mit einem um 90° schwenkbar gehalterten Haltearm 23. Dieser Haltearm ist in Längsrichtung teleskopartig ausschiebbar, was wieder hydraulisch, pneumatisch, elektromechanisch oder mechanisch erfolgt. Aus den Ständern 24 sind Stempel 25 zum Höhenausgleich ausziehbar, wobei der jeweils erreichte Auszug, wie bei der Ausbildung gemäß Fig. 6, mittels Stift-Schlitzverbindungen arretiert wird. Der Haltearm 25 hat zwei Einsteckzapfen 24, die in korrespondierende Öffnungen im Container einsteckbar sind.

Bei den Hubbrücken-Ausbildungen mit Haltearmen kann zusätzlich auch die Hubbrücke selbst, das Längsprofil der Hubbrücke, mit dem Container lösbar verbunden werden, wie dies im Ausführungsbeispiel gemäß Fig. 1 beschrieben ist.

## Patentansprüche

1. Multifunktions-Anhänger zum Transportieren und Aufstellen von Behältnissen, wie Containern, Mulden, Transportplattformen und Kipperplattformen, **dadurch gekennzeichnet,**
**dass** an den Längsseiten des Anhänger-Fahrgestells seitlich vorziehbare Hubbrücken (10, 11, 12, 23) mit abwärts gerichteten Ständern (10b, 14, 16, 17, 24) angeordnet sind,
**dass** die Hubbrücken mit dem Behältnis lösbar verbindbar sind, und
**dass** die Hubbrücken mit dem Behältnis anhebbar und absenkbar ausgebildet sind.

2. Anhänger nach Anspruch 1, **dadurch gekennzeichnet, dass** jede Hubbrücke ein horizontales Längsprofil (10a, 11a, 12a, 13a, 22a) hat, an dessen Enden die abwärts gerichteten Ständer angeordnet sind.

3. Anhänger nach Anspruch 2, **dadurch gekennzeichnet, dass** die Ständer druckmittelbetätigt oder mechanisch teleskopartig verlängerbar sind.

4. Anhänger nach einem der vorhergehenden Ansprüche, **dadurch gekennzeichnet, dass** jede Hubbrücke wenigstens ein Behältnis-Verbindungselement aufweist, das mit einem an dem Behältnis angeordneten Verbindungselement in Eingriff bringbar ist.

5. Anhänger nach Anspruch 4, **dadurch gekennzeichnet, dass** die beiderseitigen Verbindungselemente als Steckverbindung ausgebildet sind, mit einem Auszugsrohr (30), das in einer an der Unterseite des Behältnisses angeordneten Rohrführung (19c) geführt ist und dass in eine Rohröffnung (31) in der zugeordneten Hubbrücke (10) verschiebbar ist und anschließend behältnisseitig und hubbrückenseitig arretierbar ist.

6. Anhänger nach einem der vorhergehenden Ansprüche, **dadurch gekennzeichnet, dass** die Hubbrücken (10, 11, 12, 23) mit den Enden von Führungselementen lösbar verbunden sind und dass die Führungselemente eine Parallelverschiebung der Hubbrücken von dem Fahrgestell des Anhängers seitlich weg und zu dem Fahrgestell des Anhängers seitlich hin erlauben.

7. Anhänger nach Anspruch 6, **dadurch gekennzeichnet, dass** die Führungselemente Auszugsprofile (9) sind, die aus dem Fahrgestell des Anhängers seitlich herausziehbar sind.

8. Anhänger nach einem der vorhergehenden Ansprüche, **dadurch gekennzeichnet, dass** an jeder Hubbrücke wenigstens ein Behältnis-Haltearm (16, 17, 20, 23) schwenkbar angeordnet ist, der aus einer horizontalen Ruhelage um 90° in eine vertikale Position aufrichtbar ist, und der Verbindungselemente hat, die mit korrespondierenden Verbindungselementen des Behältnisses zusammenwirken.

9. Anhänger nach Anspruch 8, **dadurch gekennzeichnet, dass** die Haltearme (17, 23) druckmittelbetätigt oder mechanisch teleskopartig verlängerbar sind.
